# FASCICULE DE BREVET EUROPEEN

(11) **EP 0 498 131 B1**
(45) Date de publication et mention de la délivrance du brevet: **11.08.1993**
(21) Numéro de dépôt: 91403476.4
(22) Date de dépôt: 20.12.1991
(51) Int. Cl.: B60T 8/26, B60T 11/34

(54) **Compensateur de freinage pour véhicule automobile**
Bremsdruckregler für Kraftfahrzeuge
Brake pressure corrector for motor vehicles

(30) Priorité: 07.02.1991 FR 9101361
(43) Date de publication de la demande: 12.08.1992
(73) Titulaire: ALLIEDSIGNAL EUROPE SERVICES TECHNIQUES, 93700 Drancy (FR)
(72) Inventeur: Levrai, Roland, F-93700 Drancy (FR); Thioux, Alain, F-93700 Drancy (FR)

(56) Documents cités:
- FR-A- 2 244 654
- GB-A- 2 018 921
- GB-A- 2 024 356
- US-A- 3 804 468
- US-A- 4 159 855
- US-A- 4 217 004

## Description

La présente invention concerne un compensateur de freinage d'un circuit hydraulique comprenant un maître-cylindre à deux chambres de travail respectivement connectées à un sous-circuit, destiné à équiper un véhicule automobile.

On sait qu'un compensateur a pour rôle essentiel de réduire la pression du fluide de freinage dans les moteurs de frein des roues arrière par rapport à celle régnant dans la chambre de travail correspondante du maître-cylindre dès que cette pression atteint un seuil déterminé.

Il est cependant souhaitable qu'en cas de défaillance d'un sous-circuit, cette réduction de pression ne soit pas effectuée dans l'autre sous-circuit de manière à obtenir le maximum de freinage possible malgré la défaillance.

Le document US-A-4 217 004 décrit un compensateur qui est inhibé dès lors que l'autre sous-circuit est défaillant. Dans ce but, ce compensateur de l'art antérieur met en oeuvre un second piston disposé perpendiculairement à l'axe du premier piston portant la valve du compensateur. Ce second piston est soumis à la pression régnant dans l'autre sous-circuit et constitue une clef de verrouillage du premier piston en position ouverte de la valve du compensateur tant que la pression dans l'autre sous-circuit n'a pas dépassé un seuil déterminé par la raideur d'un ressort de rappel de la clef.

Ce compensateur présente un risque de blocage dans l'une ou l'autre position de la valve si la variation de la pression dans un sous-circuit est plus rapide que dans l'autre sous-circuit. Ce risque est, bien évidemment contraire à la sécurité et n'est pas acceptable. En outre la clef est délicate et coûteuse à réaliser.

La présente invention a pour but d'obvier à ces inconvénients.

Elle a donc pour objet un compensateur de freinage d'un circuit de freinage hydraulique comprenant un maître-cylindre à deux chambres de travail respectivement reliées à un sous-circuit, le compensateur étant disposé dans un sous-circuit et comportant un premier piston portant un moyen de valve disposé dans une communication entre une chambre de travail du maître-cylindre et au moins une roue arrière de telle façon qu'en position de repos cette communication soit ouverte, et un second piston soumis à la pression régnant dans l'autre sous-circuit de manière à bloquer en position de repos le premier piston en cas d'absence d'une pression substantielle dans l'autre sous-circuit. (voir US-A-4 217 004)

Selon l'invention une bille est disposée au repos sur le trajet du premier piston pour en interdire substantiellement le coulissement et un déplacement du second piston sous l'effet d'une pression suffisante régnant dans l'autre sous-circuit ôte du moins partiellement la bille de ce trajet.

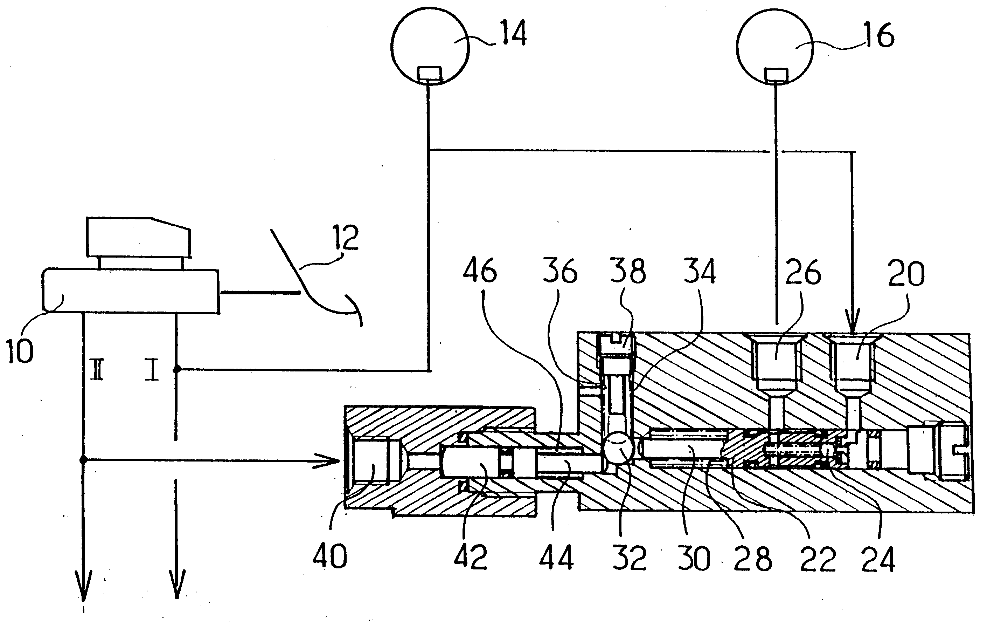

La présente invention sera mieux comprise et d'autres buts, avantages et caractéristiques de celle-ci apparaîtront plus clairement à la lecture de la description qui suit d'un mode de réalisation donné à titre non limitatif et à laquelle est jointe une planche de dessin sur laquelle :
- La Figure Unique représente schématiquement en coupe un compensateur selon la présente invention.

En référence maintenant à cette Figure Unique, un maître-cylindre 10 commandé par une pédale 12 détermine, avec ses deux chambres de travail (non représentée) deux sous-circuits I, II que l'on appelle communément les circuits primaire et secondaire.

Dans l'exemple illustré, le circuit secondaire II n'est représenté que partiellement et le circuit primaire I est représenté plus complètement tel qu'alimentant un moteur de frein d'une roue avant 14 et un moteur de frein d'une roue arrière 16 par l'intermédiaire du compensateur. Bien évidemment, l'invention s'applique à d'autres types de circuit hydraulique, par exemple un circuit dans lequel les moteurs de frein des deux roues avant sont alimentées par le circuit primaire et ceux des deux roues arrière par le circuit secondaire par l'intermédiaire du compensateur.

De manière conventionnelle la pression à réduire est appliquée par l'entrée 20 du compensateur à un piston 22 portant une valve 24 commandant une communication entre l'entrée 20 et la sortie 26 du compensateur reliée au moteur de frein de la roue associée 16.

Au repos ou sous faible pression, la valve 24 est ouverte assurant la sus-dite communication, tandis que sous pression élevée, ce piston 22 appelé premier piston se déplace pour assurer la fermeture de la valve 24 et interrompre la sus-dite communication. Un ressort de rappel 28 assure le retour en position de repos du premier piston 22 et détermine le point de coupure du compensateur.

Le premier piston 22 se prolonge par un doigt 30 en regard duquel une bille 32 est disposée. Cette bille 32, en matériau incompressible, peut se mouvoir dans un alésage 34, par exemple perpendiculaire à l'axe du premier piston 22 et est chargée par un ressort de rappel 36 la maintenant en position de repos dans l'axe du doigt 30.

La force exercée par ce ressort de rappel 36 peut favorablement être ajustée au moyen d'une vis 38 fermant l'alésage 34.

La pression régnant dans le circuit secondaire II est appliquée, par l'entrée 40 du compensateur, à un second piston 42 se prolongeant également par un doigt 44 en regard de la bille 32 mais désaxé par rapport à cette dernière. Un ressort de rappel 46 assure le retour en position de repos du second piston 42.

Sur l'exemple représenté, les axes des premiers et second pistons 22, 42 sont parallèles et légèrement décalés.

Des joints d'étanchéité sont prévus sur chacun des pistons 22, 42 et l'alésage 34 est mis à l'air libre conformément à la réglementation et pour permettre le déplacement des pistons 22, 44 et de la bille 32.

Le mode de fonctionnement du compensateur est le suivant. Lorsque le circuit secondaire II n'est pas défaillant, les pressions engendrées dans les circuits primaire I et secondaire II, lors d'un actionnement de la pédale 12 sont appliquées respectivement aux premier 22 et second piston 42.

Le second piston 42 se déplace à l'encontre du ressort de rappel 46 et le doigt 44, légèrement décalé par rapport à la bille, vient soulever la bille 32 de sa position de repos à l'encontre de son ressort de rappel 36. Lorsque le doigt 30 du premier piston 22 arrive en contact de la bille 32, il continue à soulever celle-ci et peut donc se déplacer jusqu'à la fermeture de la valve 24. Le compensateur agit alors normalement.

Par contre, en cas de défaillance du circuit secondaire II, le second piston 42 ne se déplace nullement, et la bille 32 reste au repos en regard du doigt 30 du premier piston. Lorsque la pression dans le circuit primaire I monte, le premier piston 22 coulisse dans son alésage à l'encontre du ressort 28 et le doigt 30 vient au contact de la bille 32. Celle-ci n'ayant pas été au préalable soulevée, elle bloque tout mouvement ultérieur du premier piston tendant à fermer la valve 24 qui, de ce fait, reste ouverte.

Pour favoriser le déplacement de la bille 32, les doigts 30 et 44 présentent, de façon favorable, une extrémité de forme substantiellement conique (ou tronconique) pour pouvoir coopérer avec la bille 32.

Bien évidemment, les axes des différents alésages et composants ci-avant décrits peuvent former des angles quelconques.

Bien que seul un mode de réalisation de l'invention ait été décrit, il est bien évident que différentes modifications peuvent y être apportées sans sortir du cadre défini par les revendications annexées. Par exemple le compensateur proprement dit, ou premier piston 22 peut faire partie d'un ensemble plus vaste tel qu'un compensateur asservi à la charge ou à l'accélération du véhicule ainsi équipé. La pression appliquée à l'entrée 20 du système n'est pas obligatoirement directement issue du maître-cylindre, mais peut déjà avoir été modulée.

## Revendications

1. Compensateur de freinage d'un circuit de freinage hydraulique comprenant un maître-cylindre (10) à deux chambres de travail respectivement reliées à un sous-circuit (I, II), le dit compensateur étant disposé dans un sous-circuit (I) comportant un premier piston (22) portant un moyen de valve (24) disposé dans une communication entre une chambre de travail du maître-cylindre (10) et au moins une roue arrière (16) de telle façon qu'en position de repos cette communication soit ouverte, et un second piston (42) soumis à la pression régnant dans l'autre sous-circuit (II) de manière à bloquer en position de repos le dit premier piston (22) en cas d'absence d'une pression substantielle dans le dit autre sous-circuit (II), caractérisé en ce qu'une bille (32) est disposée au repos sur le trajet du dit premier piston (22) pour en interdire substantiellement le coulissement et qu'un déplacement du dit second piston (42) sous l'effet d'une pression suffisante régnant dans le dit autre sous-circuit (II) ôte au moins partiellement la bille du dit trajet.

2. Compensateur de freinage selon la revendication 1, caractérisé en ce que la dite bille (32) est chargée par un ressort (36) la rappelant en position de repos.

3. Compensateur de freinage selon la revendication 2, caractérisé en ce que le dit ressort (36) est précontraint par l'intermédiaire d'une vis réglable (38).

4. Compensateur de freinage selon l'une quelconque des revendications précédentes, caractérisé en ce que les deux axes longitudinaux des dits premier et second pistons (22, 42) sont parallèles et séparés l'un de l'autre d'une distance suffisante pour que le dit second piston (42) soulève la bille (32).

5. Compensateur de freinage selon la revendication 4, caractérisé en ce que l'extrémité du dit second piston (42) soulevant la dite bille (32) affecte une forme substantiellement conique destinée à coopérer avec la dite bille (32).

6. Compensateur de freinage selon la revendication 5, caractérisé en ce que l'extrémité du dit premier piston (22) en regard de la dite bille (32) affecte une forme substantiellement conique destinée à coopérer avec la dite bille (32).

## Patentansprüche

1. Bremsdruck-Ausgleichseinrichtung eines Hydraulikbremskreises, der einen Hauptzylinder (10) mit zwei jeweils mit einem Unterkreis (I, II) verbundenen Arbeitskammern aufweist, wobei die Ausgleichseinrichtung in einem Unterkreis (I) angeordnet ist und versehen ist mit einem ersten Kolben (22), der ein Ventilmittel (24) trägt, das in einem Verbindungsweg zwischen einer Arbeitskammer des Hauptzylinders (10) und wenigstens einem hinteren Rad (16) angeordnet ist, derart, daß dieser Verbindungsweg in der Ruhestellung geöffnet ist, und einem zweiten Kolben (42), der mit dem im anderen Unterkreis (II) herrschenden Druck beaufschlagt ist, derart, daß er bei Abwesenheit eines wesentlichen Drucks im anderen Unterkreis (II) den ersten Kolben (22) in dessen Ruhestellung blockiert, dadurch gekennzeichnet, daß im Weg des ersten Kolbens (22) eine Kugel (32) in Ruhestellung angeordnet ist, um diesen am Gleiten im wesentlichen zu hindem, und daß eine Verschiebung des zweiten Kolbens (42) unter der Wirkung eines im anderen Unterkreis (II) herrschenden ausreichenden Drucks die Kugel wenigstens teilweise aus dem genannten Weg entfernt.

2. Bremsdruck-Ausgleichseinrichtung gemäß Anspruch 1, dadurch gekennzeichnet, daß die Kugel (32) von einer Feder (36) belastet ist, die sie in ihre Ruhestellung zurückstellt.

3. Bremsdruck-Ausgleichseinrichtung gemäß Anspruch 2, dadurch gekennzeichnet, daß die Feder (36) mittels einer Einstellschraube (38) vorgespannt ist.

4. Bremsdruck-Ausgleichseinrichtung gemäß einem der vorangehenden Ansprüche, dadurch gekennzeichnet, daß die zwei Längsachsen des ersten bzw. des zweiten Kolbens (22, 24) parallel und voneinander um einen Abstand entfernt sind, der ausreicht, damit der zweite Kolben (42) die Kugel (32) hochhebt.

5. Bremsdruck-Ausgleichseinrichtung gemäß Anspruch 4, dadurch gekennzeichnet, daß das die Kugel (32) hochhebende Ende des zweiten Kolbens (42) eine im wesentlichen konische Gestalt besitzt, die dazu vorgesehen ist, mit der Kugel (32) zusammenzuwirken.

6. Bremsdruck-Ausgleichseinrichtung gemäß Anspruch 5, dadurch gekennzeichnet, daß das gegenüber der Kugel (32) befindliche Ende des ersten Kolbens (22) eine im wesentlichen konische Gestalt besitzt, die dazu vorgesehen ist, mit der Kugel (32) zusammenzuwirken.

## Claims

1. Brake compensator of a hydraulic braking circuit comprising a master cylinder (10) with two working chambers respectively connected to a subcircuit (I, II), said compensator being arranged in a subcircuit (I) comprising a first piston (22) carrying a valve means (24) arranged in a communication between a working chamber of the master cylinder (10) and at least one rear wheel (16) in such a way that, in the rest position, this communication is open, and a second piston (42) subjected to the pressure prevailing in the other subcircuit (II) so as to lock said first piston (22) in the rest position in the event of the absence of a substantial pressure in said other subcircuit (II), characterized in that a ball (32) is arranged at rest on the path of said first piston (22) in order to prevent it substantially from sliding, and in that a displacement of said second piston (42) under the effect of a sufficient pressure prevailing in said other subcircuit (II) removes the ball at least partially from said path.

2. Brake compensator according to claim 1, characterized in that said ball (32) is loaded by a spring (36) returning it into the rest position.

3. Brake compensator according to claim 2, characterized in that said spring (36) is prestressed via an adjustable screw (38).

4. Brake compensator according to any of the preceding claims, characterized in that the two longitudinal axes of said first and second pistons (22, 42) are parallel and separated from each other by a sufficient distance for said second piston (42) to lift the ball (32).

5. Brake compensator according to claim 4, characterized in that the end of said second piston (42) lifting up said ball (32) is provided with a substantially conical shape intended to interact with said ball (32).

6. Brake compensator according to claim 5, characterized in that the end of said first piston (22) opposite said ball (32) is provided with a substantially conical shape intended to interact with said ball (32).
